# EUROPÄISCHE PATENTSCHRIFT

(11) **EP 0 583 544 B1**
(45) Veröffentlichungstag und Bekanntmachung des Hinweises auf die Patenterteilung: **23.07.1997**
(21) Anmeldenummer: 93105315.1
(22) Anmeldetag: 31.03.1993
(51) Int. Cl.: B01D 29/01

(54) **Verfahren und Vorrichtung zur Herstellung eines Filters**
Method and apparatus of filter-manufacturing
Procédé et appareil pour la fabrication d'un filtre

(30) Priorität: 18.07.1992 DE 4223723
(43) Veröffentlichungstag der Anmeldung: 23.02.1994
(73) Patentinhaber: FILTERWERK MANN & HUMMEL GMBH, D-71631 Ludwigsburg (DE)
(72) Erfinder: Wenz, Berthold, W-7123 Sachsenheim 3 (DE)
(74) Vertreter: Voth, Gerhard, Dipl.-Ing.

(56) Entgegenhaltungen:
- WO-A-86/07580
- DE-U- 8 908 176
- GB-A- 2 209 354

## Beschreibung

Die Erfindung betrifft ein Verfahren zur Herstellung eines Filters sowie eine Vorrichtung zur Durchführung des Verfahrens gemäß den Ansprüchen 1 und 13.

Ein derartiges Verfahren, bzw. eine derartige Vorrichtung ist aus der GB-A-22 09 354 sowie aus der europäischen Patentschrift 260 267 und der DE-A-25 23 424 bekannt, z.B. zur Herstellung von Luftfilitereinsätzen.

Will man nun Filtereinsätze nach dem im GB-A-22 09 354 oder EP-A-260 267 beschriebenen Verfahren fertigen, so ist daran nachteilig, daß nach dem Falten des Filtermaterials dieses undefiniert in die Schraube einläuft, die als kammähnliches Teil die Vorsprünge bestimmen soll. Diese undefinierte Übergabe kann zur Beschädigung des Filtermaterials und daraus resultierenden Undichtigkeiten des Filters führen.

Man könnte nun, wie in der DE-A-25 23 424 beschrieben, durch ein kompliziertes Getriebe das gefaltete Filtermaterial in die Schnecke einlegen. Dies ist aber sehr aufwendig, es würde das Verfahren und damit auch das Endprodukt verteuern. Es erfordert außerdem einen erhöhten Montage- bzw. Justieraufwand im Betrieb.

Es ist somit Aufgabe der Erfindung, ein Verfahren und eine Vorrichtung zu schaffen, womit die einfache, billige und sichere Herstellung von dichten Filtereinsätzen gelingt.

Diese Aufgabe wird durch Anspruch 1 gelöst. Eine Vorrichtung zur Durchführung des Verfahrens ist in Anspruch 13 beschrieben.

Wesentlicher Vorteil des dargestellten Verfahrens ist, daß nach dem Prägen der Filtermaterialbahn wenigstens zwei längs zur Filtermaterialbahn laufende Zahnriemen sowohl für die Faltung als auch für die definierte Faltenabstandshaltung sorgen. Diese Fixierung sorgt für eine zerstörungsfreie Formgebung des Filtermaterials.

Eine vorteilhafte Weiterbildung der Erfindung sieht vor, daß durch wenigstens eine Schnecke das gefaltete Filtermaterialband von den Zahnriemen nahtlos, also leicht überlappend, übergeben wird, so daß das Filtermaterialband ohne Unterbrechung geführt wird.

Weiterhin kann man vorteilhafterweise vorsehen, daß die Vorrichtung im Anschluß an die Zahnriemen wenigstens eine Schnecke so überlappend aufweist, daß das gefaltete Filtermaterialband ohne Unterbrechung geführt ist.

Eine weitere vorteilhafte Weiterbildung der Erfindung sieht vor, daß die Seitenkanten der gefalteten Filtermaterialbahn mittels eines Frequenzgenerators und/oder mit Hilfe einer Presse mit Seitenstreifen zu dichten Filtereinsätzen gefügt werden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Ausführungsbeispiele der Erfindung und ihrer vorteilhaften Weiterbildungen werden im folgenden unter Bezugnahme auf die beigefügten Zeichnungen näher beschrieben. Es stellen dar:
- Figur 1: Anlagenschema nach Ausführungsbeispiel 1

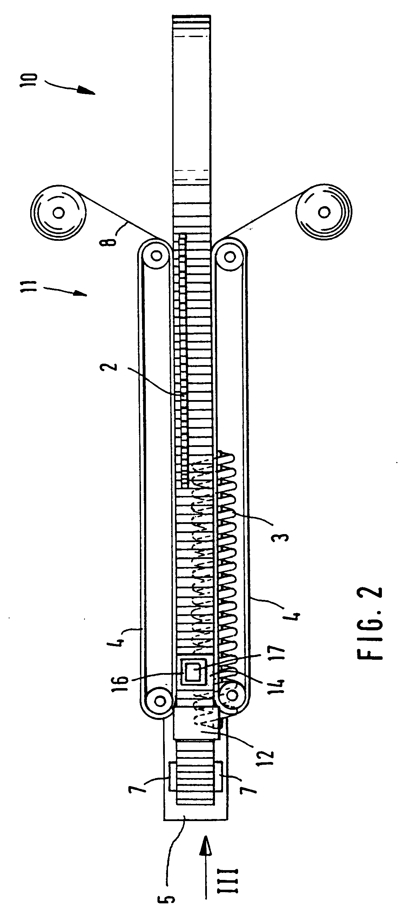

- Figur 2: Anlagenschema nach Ausführungsbeispiel 2

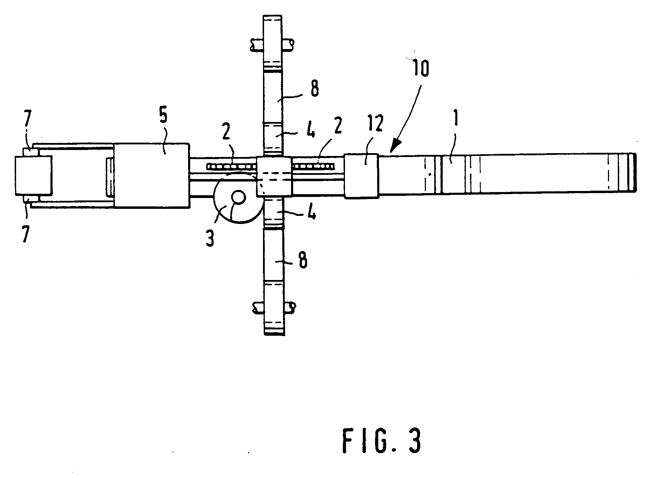

- Figur 3: Seitenansicht in Pfeilrichtung III
- Figur 4: Anlagenschema nach Ausführungsbeispiel 3
- Figur 5: Anlagenschema nach Ausführungsbeispiel 4

Die endlose Filtermaterialbahn 1 wird zunächst in einer Prägestation 10 geprägt. Von dort gelangt diese in den Einflußbereich einer Faltstation 11, genauer gesagt, zwischen zwei Zahnriemen 2, die die geprägte Filtermaterialbahn 1 definiert falten. Nach den Zahnriemen läuft die gefaltete Filtermaterialbahn 1 weiterhin definiert in eine Schnecke 3. Diese Schnecke 3 ist leicht austauschbar und kann über eine veränderliche Steigung verfügen. Vor der Entnahme der gefalteten Filter mittels Schaumstoffgreifern 7 wird dieser von der Filtermaterialbahn 1 mittels Trennvorrichtung 12 abgetrennt.

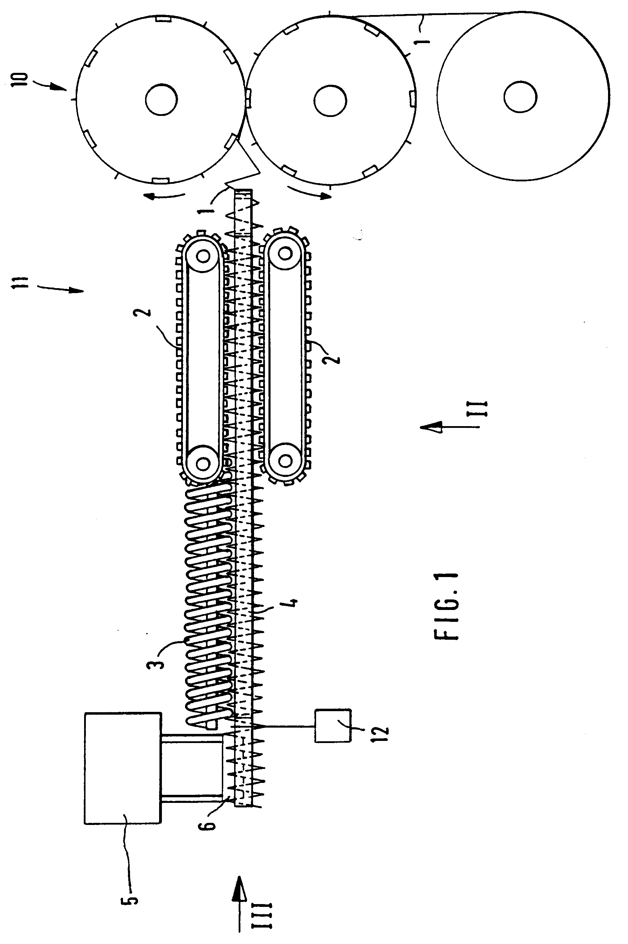

Im Ausführungsbeispiel in Figur 1 läuft die Filtermaterialbahn 1 zwischen Fixationsriemen 4 so, daß eine definierte Führung der gefalteten Filtermaterialbahn 1 vom Eintritt in die Zahnriemen 2 bis zur Entnahme durch die kammartigen Elemente 6 der Übernahmestation 5 gewährleistet ist.

Im Ausführungsbeispiel 2 wird zusätzlich zur in Ausführungsbeispiel 1 genannten Variante ein Streifen 8 an die Filtermaterialbahn 1 mittels einer Fügestation 14 gefügt, insbesondere mit Frequenzgenerator 16 und Presse 17. Hier wird die Übernahmestation 5 von Schaumstoffgreifern 7 unterstützt.

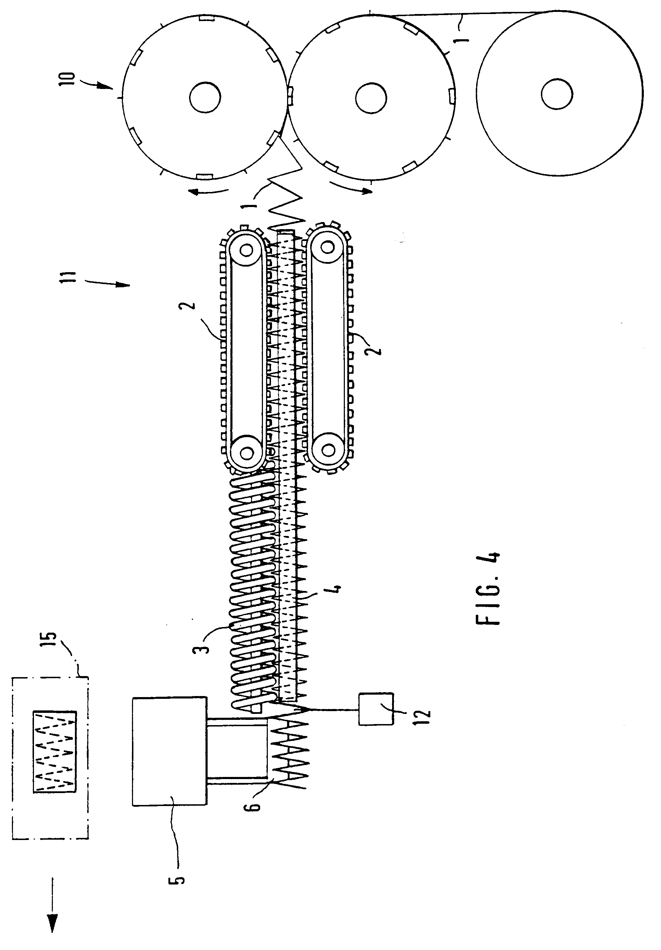

Im Ausführungsbeispiel 3, dargestellt in Figur 4, wird die Übernahmestation 5 von kammartigen Elementen 6 unterstützt. Diese kammartigen Elemente 6 übernehmen die gefaltete Filtermaterialbahn 1 aus dem Bereich der Schnecke 3, so daß die Filtermaterialbahn 1 keinen undefinierten Zustand einnehmen kann. Wenn die kammartigen Elemente 6 mit der Filtermaterialbahn 1 an der richtigen Stelle angekommen sind, dann tritt die Trennvorrichtung 12 in Aktion und die Übernahmestation 5 reicht das definiert in den kammartigen Elementen 6 fixierte Stück der Filtermaterialbahn 1 in die Spritzgußstation 15, in der das Stück der Filtermaterialbahn 1 von Kunststoff angespritzt wird.

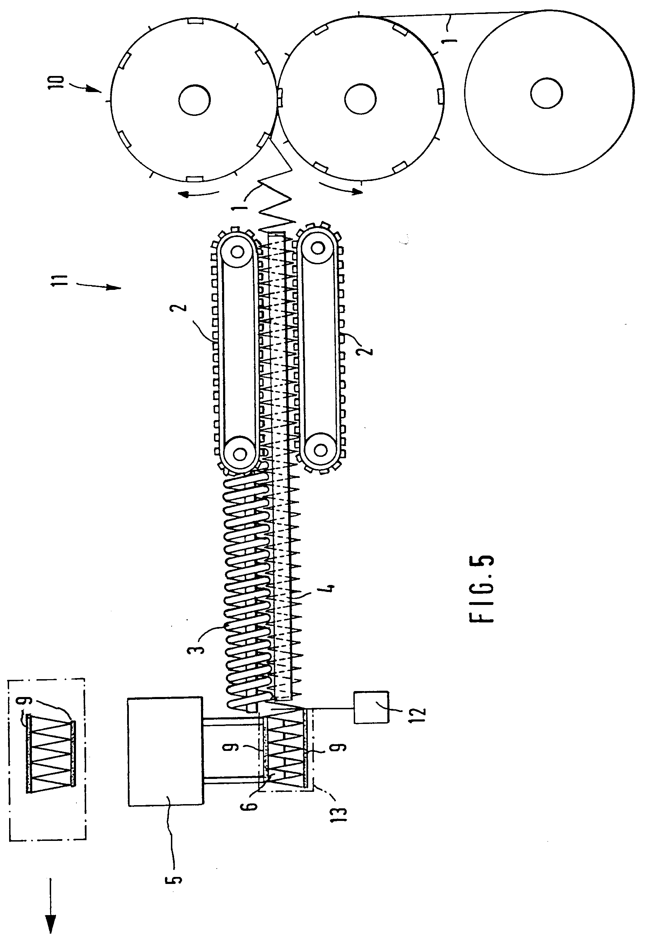

Im Ausführungsbeispiel 4, dargestellt in Figur 5, wird im Unterschied zu Ausführungsbeispiel 3 eine Leimstation 13 hinzugefügt, die Leimraupen 9 auf die Filtermaterialbahn 1 aufbringt, die sowohl der Festigkeit als auch der Dichtheit des Filters dienen.

### Bezugszeichenliste

- 1: Filtermaterialbahn
- 2: Zahnriemen
- 3: Schnecke
- 4: Fixationsriemen
- 5: Übernahmevorrichtung
- 6: Kammartige Elemente
- 7: Schaumstoffgreifer
- 8: Streifen
- 9: Leimraupe
- 10: Prägestation
- 11: Faltstation
- 12: Trennvorrichtung
- 13: Leimstation
- 14: Fügestation
- 15: Spritzgußstation
- 16: Frequenzgenerator
- 17: Presse

## Patentansprüche

1. Verfahren zur Herstellung eines zick-zackförmig gefalteten Filters, insbesondere aus einer endlosen Filtermaterialbahn (1),
wobei die Filtermaterialbahn (1) zunächst zur Vorbereitung der Faltung geprägt wird,
die geprägte Filtermaterialbahn dann entsprechend der Prägung gefaltet wird, indem sie in wenigstens zwei voneinander beabstandete, oberhalb und unterhalb der Filtermaterialbahn (1) angeordnete und längs zur Filtermaterialbahn (1) laufende Zahnriemen (2) eingeführt und fixiert wird,
wobei im Anschluß an die Zahnriemen (2) durch wenigstens eine Schnecke (3), die die Zahnriemen in ihrer räumlichen Anordnung leicht überlappt, mit definiertem Faltenabstand nahtlos geführt und weitergeleitet wird.

2. Verfahren nach Anspruch 1, wobei die gefaltete Filtermaterialbahn (1) von wenigstens zwei längs zur Filtermaterialbahn (1) laufenden Fixationsriemen (4) geführt wird.

3. Verfahren nach Anspruch 1 oder 2, wobei die geprägte und gefaltete Filtermaterialbahn (1) zum Zweck der Übernahme von der Endlosbahn abgetrennt wird.

4. Verfahren nach einem oder mehreren der vorgenannten Ansprüche, wobei mittels einer Übernahmevorrichtung (5) die gefaltete und fixierte Filtermaterialbahn entnommen wird.

5. Verfahren nach einem oder mehreren der vorgenannten Ansprüche, wobei die Übernahmevorrichtung mit kammartigen Elementen (6) betrieben wird.

6. Verfahren nach einem oder mehreren der vorgenannten Ansprüche, wobei die Übernahmevorrichtung (5) mit elastischen Elementen, insbesondere Schaumstoffgreifern (7) betrieben wird.

7. Verfahren nach einem oder mehreren der vorgenannten Ansprüche, wobei um die gefaltete und fixierte Filtermaterialbahn (1) ein Streifen (8) gefügt wird.

8. Verfahren nach einem oder mehreren der vorgenannten Ansprüche, wobei die Seitenkanten der gefalteten und fixierten Filtermaterialbahn (1) direkt von Kunststoff ummantelt werden.

9. Verfahren nach einem oder mehreren der vorgenannten Anprüche, wobei in einer Leimstation (13) auf die gefaltete und fixierte Filtermaterialbahn (1) mindestens eine Leimraupe (9) aufgebracht wird.

10. Verfahren nach einem oder mehreren der vorgenannten Ansprüche, wobei die Filtermaterialbahn (1) mittels hoher Frequenzen gefügt wird.

11. Verfahren nach einem odere mehreren der vorgenannten Ansprüche, wobei die Filtermaterialbahn (1) mittels hohem Druck gefügt wird.

12. Vorrichtung zur Herstellung eines zick-zackförmig gefalteten Filters, insbesondere aus einer endlosen Filtermaterialbahn (1),
wobei die Vorrichtung zur Vorbereitung der Faltung eine Prägestation (10) aufweist,
wobei der Prägestation eine Faltstation (11) folgt,
wobei die Vorrichtung wenigstens zwei voneinander beabstandete, oberhalb und unterhalb der Filtermaterialbahn (1) angeordnete und längs zur Filtermaterialbahn (1) laufende Zahnriemen (2) aufweist,
wobei die Vorrichtung im Anschluß an die Zahnriemen (2) wenigstens eine Schnecke (3) aufweist.

13. Vorrichtung nach Anspruch 12, wobei die Vorrichtung zwei längs zur Filtermaterialbahn (1) laufende und der Führung dienende Fixationsriemen (4) aufweist.

14. Vorrichtung nach Anspruch 12 oder 13, wobei die Vorrichtung eine Trennvorrichtung (12) aufweist.

15. Vorrichtung nach einem oder mehreren der vorgenannten Ansprüche 12-14, wobei die Vorrichtung eine Übernahmevorrichtung (5) aufweist, insbesondere mit Schaumstoffgreifern (7).

16. Vorrichtung nach einem oder mehreren der vorgenannten Ansprüche 12-15, wobei die Vorrichtung kammartige Elemente (6) aufweist.

17. Vorrichtung nach einem oder mehreren der vorgenannten Ansprüche 12-16, wobei die Vorrichtung eine Fügestation (14) aufweist.

18. Vorrichtung nach einem oder mehreren der vorgenannten Ansprüche 12-17, wobei die Vorrichtung eine Spritzgußstation (15) aufweist.

19. Vorrichtung nach einem oder mehreren der vorgenannten Ansprüche 12-18, wobei die Vorrichtung einen Frequenzgenerator (16) aufweist.

20. Vorrichtung nach einem oder mehreren der vorgenannten Ansprüche 12-19, wobei die Vorrichtung eine Presse (17) aufweist.

21. Vorrichtung nach einem oder mehreren der vorgenannten Ansprüche 12-20, wobei die Vorrichtung eine Leimstation (13) aufweist.

## Claims

1. Method of producing a filter folded in a zig-zag manner, more especially from an endless web of filter material (1),
wherein the web of filter material (1) is initially pressed to prepare the folding,
wherein the pressed web of filter material is then folded according to the pressing, in that it is introduced and secured between at least two spaced-apart toothed belts (2), which are disposed above and below the web of filter material (1) and extend longitudinally relative to the web of filter material (1), and
wherein, in conjunction with the toothed belts (2), at least one screw (3), which slightly overlaps the toothed belts in their three-dimensional disposition, is guided and advanced in a seamless manner with a specific spacing from the fold.

2. Method according to claim 1, wherein the folded web of filter material (1) is guided by at least two securing belts (4), which extend longitudinally relative to the web of filter material (1).

3. Method according to claim 1 or 2, wherein the pressed and folded web of filter material (1) is severed from the endless web for take-over purposes.

4. Method according to one or more of the above-mentioned claims, wherein the folded and secured web of filter material is removed by means of a take-over device (5).

5. Method according to one or more of the above-mentioned claims, wherein the take-over device is operated with cam-like elements (6).

6. Method according to one or more of the above-mentioned claims, wherein the take-over device (5) is operated with resilient elements, more especially expanded material grippers (7).

7. Method according to one or more of the above-mentioned claims, wherein a strip (8) is joined around the folded and secured web of filter material (1).

8. Method according to one or more of the above-mentioned claims, wherein the lateral edges of the folded and secured web of filter material (1) are covered directly by plastics material.

9. Method according to one or more of the above-mentioned claims, wherein at least one glue bead (9) is applied to the folded and secured web of filter material (1) in a gluing station (13).

10. Method according to one or more of the above-mentioned claims, wherein the web of filter material (1) is joined by means of high frequencies.

11. Method according to one or more of the above-mentioned claims, wherein the web of filter material (1) is joined by means of high pressure.

12. Apparatus for producing a filter folded in a zig-zag manner, more especially from an endless web of filter material (1),
wherein the apparatus includes a pressing station (10) for preparing the folding,
wherein a folding station (11) follows the pressing station,
wherein the apparatus includes at least two spaced-apart toothed belts (2), which are disposed above and below the web of filter material (1) and extend longitudinally relative to the web of filter material (1), and
wherein the apparatus includes at least one screw (3) in conjunction with the toothed belts (2).

13. Apparatus according to claim 12, wherein the apparatus includes two securing belts (4), which extend longitudinally relative to the web of filter material (1) and are used for guidance purposes.

14. Apparatus according to claim 12 or 13, wherein the apparatus includes a separating device (12).

15. Apparatus according to one or more of the above-mentioned claims 12-14, wherein the apparatus includes a take-over device (5), more especially provided with expanded material grippers (7).

16. Apparatus according to one or more of the above-mentioned claims 12-15, wherein the apparatus includes cam-like elements (6).

17. Apparatus according to one or more of the above-mentioned claims 12-16, wherein the apparatus includes a jointing station (14).

18. Apparatus according to one or more of the above-mentioned claims 12-17, wherein the apparatus includes an injection moulding station (15).

19. Apparatus according to one or more of the above-mentioned claims 12-18, wherein the apparatus includes a frequency generator (16).

20. Apparatus according to one or more of the above-mentioned claims 12-19, wherein the apparatus includes a press (17).

21. Apparatus according to one or more of the above-mentioned claims 12-20, wherein the apparatus includes a gluing station (13).

## Revendications

1. Procédé de fabrication d'un filtre replié en zigzag, notamment à partir d'un ruban sans fin de matière filtrante (1),
- le ruban de matière filtrante (1) étant tout d'abord matricé pour préparer les plis,
- le ruban de matière filtrante (1) matricé est alors plié suivant le matriçage correspondant par introduction et le blocage du ruban dans au moins deux courroies crantées (2), écartées l'une de l'autre, au-dessus et en dessous du ruban de matière filtrante (1), ces courroies circulant le long du ruban de matière filtrante (1),
- et en aval des courroies crantées (2), au moins une vis (3) qui chevauche légèrement la disposition les courroies crantées dans l'espace pour être guide en continu et transféré avec un intervalle défini entre les plis.

2. Procédé selon la revendication 1,
caractérisé en ce que
le ruban de matière filtrante (1), plié, est guidé par au moins deux courroies de fixation (4) circulant le long du ruban de matière filtrante (1).

3. Procédé selon la revendication 1 ou 2,
caractérisé en ce que
le ruban de matière filtrante (1), imprimé et plié est coupé de la bande sans fin pour être transféré.

4. Procédé selon l'une ou plusieurs des revendications précédentes,
caractérisé en ce que
le ruban de matière filtrante (1) plié et bloqué est extrait par un dispositif de transfert (5).

5. Procédé selon l'une ou plusieurs des revendications précédentes,
caractérisé en ce que
le dispositif de transfert comporte des éléments en forme de peigne.

6. Procédé selon l'une ou plusieurs des revendications précédentes,
caractérisé en ce que
le dispositif de transfert (5) comporte des éléments élastiques notamment des pinces en mousse (7).

7. Procédé selon l'une ou plusieurs des revendications précédentes,
caractérisé en ce que
le ruban de matière filtrante (1) plié et fixé est assemblé par une bande (8).

8. Procédé selon l'une ou plusieurs des revendications précédentes,
caractérisé en ce que
les arêtes latérales du ruban de matière filtrante plié et bloqué (1) sont entourées directement avec de la matière plastique.

9. Procédé selon l'une ou plusieurs des revendications précédentes,
caractérisé en ce qu'
un cordon de colle (9) est appliqué dans un poste d'encollage (13) sur le ruban de matière filtrante plié et fixé (1).

10. Procédé selon l'une ou plusieurs des revendications précédentes,
caractérisé en ce que
le ruban de matière filtrante (1) est assemblé avec des fréquences élevées.

11. Procédé selon l'une ou plusieurs des revendications précédentes,
caractérisé en ce que
le ruban de matière filtrante (1) est assemblé sous une pression élevée.

12. Dispositif pour la fabrication d'un filtre plié en zigzag notamment à partir d'un ruban de matière filtrante (1), sans fin,
dans lequel
- le dispositif comporte une station de matriçage (10) pour préparer les plis,
- la station de matriçage est suivie d'une station de pliage (11),
- le dispositif comporte au moins deux courroies crantées (2) écartées l'une de l'autre, placées au-dessus et en dessous du ruban de matière filtrante (1) et circulant le long de cette bande (1),
- le dispositif comporte au moins une vis (3) en aval des courroies crantées (2).

13. Dispositif selon la revendication 12,
caractérisé en ce qu'
il comporte deux courroies de fixation (4) circulant le long du ruban de matière filtrante (1) et servant au guidage.

14. Dispositif selon la revendication 12 ou 13,
caractérisé en ce qu'
il comporte un dispositif de coupe (12).

15. Dispositif selon l'une ou plusieurs des revendications précédentes 12 à 14,
caractérisé en ce qu'
il comporte un dispositif de transfert (5) notamment avec des pinces en mousse (7).

16. Dispositif selon l'une ou plusieurs des revendications précédentes 12 à 15,
caractérisé en ce qu'
il comporte des éléments (6) en forme de peigne.

17. Dispositif selon l'une ou plusieurs des revendications précédentes 12 à 16,
caractérisé en ce qu'
il comporte un poste d'assemblage 14.

18. Dispositif selon l'une ou plusieurs des revendications précédentes 12 à 17,
caractérisé en ce qu'
il comporte un poste d'injection (15).

19. Dispositif selon l'une ou plusieurs des revendications précédentes 12 à 18,
caractérisé en ce qu'
il comporte un générateur de fréquences (16).

20. Dispositif selon l'une ou plusieurs des revendications précédentes 12 à 19,
caractérisé en ce qu'
il comporte une presse (17).

21. Dispositif selon l'une ou plusieurs des revendications précédentes 12 à 20,
caractérisé en ce qu'
il comporte un poste d'encollage (13).
